# EUROPEAN PATENT APPLICATION

(11) **EP 3 587 900 A1**
(43) Date of publication of application: **01.01.2020**
(21) Application number: 18192959.7
(22) Date of filing: 06.09.2018
(51) Int. Cl.: F21S 10/00, F21V 14/08, G03B 25/00

(54) **LIGHTING DEVICE**

(30) Priority: 27.06.2018 CN 201821001780 U
(71) Applicant: Yang, Swiss, 518127 Shenzhen (CN)
(72) Inventor: Yang, Swiss, 518127 Shenzhen (CN)
(74) Representative: Puschmann Borchert Bardehle Patentanwälte Partnerschaft mbB

(57) **Abstract**

The invention relates to a lighting device, which includes a light source, a pattern disc (5) provided with a plurality of pattern sheets, a rotating shaft (6) and a drive mechanism. The rotating shaft (6) passes through the axial center of the pattern disc (5) and is driven to rotate by the drive mechanism to rotate the pattern disc (5). The pattern sheets are then rotated in turn to a light path of the light emitted by the light source. The lighting device further includes a positioning unit for pattern disc (5) including a Hall plate (2), a fixing bracket (3) for the Hall plate (2) and a magnet (4). The Hall plate (2) is mounted on the fixing bracket (3) for the Hall plate, and the magnet (4) is mounted on the pattern disc (5). The pattern disc (5) is rotated to bring the magnet (4) close to the Hall plate (2) to generate magnetic induction. According to the present lighting device using the Hall induction principle and the Hall plate, the reset and positioning of the pattern disc of the lighting device is effectively realized with less errors, and the precision of the reset positioning of the pattern disc and the artistic ambience effect of the light fixture are improved. Therefore, the lighting device is applicable to the reset and positioning of pattern discs of various kinds of light fixtures.

## Description

### TECHNICAL FIELD

The invention relates to the field of light fixture, and particularly to a lighting device.

### BACKGROUND ART

With the enrichment of social and cultural life, the appreciation level of people has been greatly improved, and the perfection of details is increasingly required. For example, in the field of decorative light fixture, demands on effects of lighting patterns and other aspects are higher and higher. In a decorative lamp, in order to achieve pattern and color transformation, a pattern disc is generally installed and is driven to rotate by a motor to form different patterns. Or a combination of a pattern disc and a color disc is used, and according to actual needs, the pattern disc or the color disc are driven to rotate or mix by the motor, so as to form different colors and patterns. There are generally two methods for the reset positioning of the pattern disc in the prior art. One method is to control the rotation of the pattern disc by controlling the switch of the motor, but this method cannot accurately reset the pattern disc to the starting position, which has great randomness and is inconvenient to operate. The other method is to set a limiting column on the pattern disc and to realize the reset positioning by the blocking of the limiting column. However, in this method, a reaction force will be generated by the collision contact with the limiting column, and the pattern disc will thus rebound under the influence of the reaction force, which leads to certain errors and makes the reset positioning inaccurate. In addition, the limiting column is easy to become loosened after experiencing multiple collisions, which will affect the application effect.

### SUMMARY OF THE INVENTION

It's therefore an object of the present invention to provide a lighting device capable of accurately realizing the reset positioning of a pattern disc, which is free from the aforesaid drawbacks of the prior art.

A lighting device according to the present invention includes a light source, a pattern disc provided with a plurality of pattern sheets, a rotating shaft and a drive mechanism. The rotating shaft passes through the axial center of the pattern disc and is driven to rotate by the drive mechanism so as to rotate the pattern disc. The pattern sheets then are rotated in turn to a light path of the light emitted by the light source. The lighting device further includes a positioning unit for pattern disc. The positioning unit for pattern disc includes a Hall plate, a fixing bracket for the Hall plate and a magnet. The Hall plate is mounted on the fixing bracket for the Hall plate, and the magnet is mounted on the pattern disc. The pattern disc is rotated to bring the magnet close to the Hall plate to generate magnetic induction.

The pattern disc is driven to rotate by the drive mechanism, and the light emitted by the light source is emitted via a pattern sheet to generate an effect corresponding to the pattern sheet. When a next pattern sheet is rotated to the optical path, the lighting device generates an effect corresponding to the next pattern sheet, so that the present product has an auto-play function. According to the need of the pattern switching of a lamp, the pattern disc needs to be reset and positioned. When the magnet passes over the Hall plate, the Hall plate senses the magnet and cuts off the power supply of the drive mechanism according to the sensing data to stop the drive mechanism. Then, the starting pattern sheet of the pattern disc is reset and positioned to the starting position. Next time when the lighting device is turned on, the pattern sheet corresponding to the light emitted by the light source is the starting pattern sheet of the pattern disc. This is a method for completing the reset and positioning of the pattern disc during the closing process of the lighting device. Similarly, the reset and positioning can also be completed during the opening process of the lighting device. The drive mechanism runs when the power supply of the drive mechanism is turned on. When the magnet passes over the Hall plate, the Hall plate senses the magnet and turns on the power supply of the light source according to the sensing data to make the light source emit light, such that the pattern sheet corresponding to the light emitted by the light source is the starting pattern sheet of the pattern disc. According to the present lighting device using the Hall induction principle and the Hall plate, the reset and positioning of the pattern disc of the lighting device is effectively realized with less errors, and the precision of the reset positioning of the pattern disc and the artistic ambience effect of the light fixture are improved. Therefore, the lighting device is applicable to the reset positioning of pattern discs of various kinds of light fixtures. In the case where a plurality of lighting devices are used together, the consistency of the orders and directions of the patterns of the lighting devices are ensured by the positioning unit for pattern disc.

Further, the Hall plate is aligned with the magnet in a vertical direction. When the magnet passes over the Hall plate, the Hall plate senses the magnet to generate magnetic induction. The Hall plate and the magnet being aligned in the vertical direction in the present lighting device can ensure enough intensity of the magnetic induction to avoid that the Hall plate does not sense the magnet.

Further, the magnet is positioned in proximity to the starting pattern sheet on the pattern disc. To improve the artistic an-ibience effect of the light fixture, in the case where a plurality of lighting devices are used together, starting patterns of these lights need to be fixed in advance. The magnet is provided at a position in proximity to the starting pattern sheet, such that patterns of the present lighting device are always switched from the starting pattern sheet after each power-on.

Further, the pattern disc is provided with a number of fixing units for pattern sheet, and the number of the fixing units for pattern sheet corresponds to the number of the pattern sheets. According to the different artistic effects that are needed, the pattern sheets of the lighting device need to be frequently changed. Therefore, the pattern sheets are fixed on the pattern disc by the fixing units for pattern sheet. When a pattern sheet needs to be changed, the fixing unit for pattern sheet is removed, and the pattern sheet is replaced with a new pattern sheet.

The lighting device further includes a condenser provided on the light path of the light emitted by the light source. The light emitted by the light source is reflected by the condenser and then is converged into a main beam along the propagation direction of the light, so that the patterns formed will be clearer.

Further, the condenser includes a lens bracket, a lens and a lens fixing unit for fixing the lens, the lens bracket is provided between the light source and the pattern disc, the lens is embedded in the lens bracket by the lens fixing unit, and the fixing bracket for the Hall plate is provided on the lens bracket. In order to arrange the condenser on the optical path of the light emitted by the light source, the condenser is preferably provided between the light source and the pattern disc, so that before emitted on the pattern sheets, the light is concentrated by the condenser into a main beam, other than that the light is incident on the pattern sheet in a divergent form. If the light is emitted on the pattern sheet in a divergent form, the patterns displayed finally will be blurred.

Further, the fixing unit for pattern sheet and the lens fixing unit are pressers, which have good fixing capability and are convenient to remove.

The lighting device further includes a control panel for controlling the pattern switching time and connected with the drive mechanism. Through the control panel, a user can control the pattern switching time, for example, switching the patterns once every two seconds or switching the patterns once every five seconds. Since the drive mechanism drives the rotation of the rotating shaft to rotate the pattern disc, and the control panel is connected with the drive mechanism, the movement of the drive mechanism is controlled in order to control the rotation speed of the pattern disc, thereby realizing the control of the pattern switching time.

Further, the light source is a light-emitting diode (LED), as LED has high efficiency and long lifetime, and is thus suitable for use in outdoor lighting devices to achieve certain effects, technical objectives, holiday atmospheres, or the like.

Further, the drive mechanism is a stepper motor. As commonly used a drive mechanism, the stepper motor is widely used in various automated control systems.

The desirable benefits of the invention will be achieved. The pattern disc is driven to rotate by the drive mechanism, and the light emitted by the light source is emitted via a pattern sheet to generate an effect corresponding to the pattern sheet. When a next pattern sheet is rotated to the optical path, the lighting device generates an effect corresponding to the next pattern sheet, so that the present product has an auto-play function. According to the present lighting device using the Hall induction principle and the Hall plate, the reset and positioning of the pattern disc of the lighting device is effectively realized with less errors, and the precision of the reset and positioning of the pattern disc and the artistic ambience effect of the light fixture are improved. Therefore, the lighting device is applicable to the reset and positioning of pattern discs of various kinds of light fixtures. In the case where a plurality of lighting devices are used together, the consistency of the orders and directions of the patterns of the lighting devices are ensured by the pattern disc positioning unit. The present lighting device includes the condenser provided on the light path of the light emitted by the light source. The light emitted by the light source is reflected by the condenser and then is converged into a main beam along the propagation direction of the light, so that the patterns formed will be clearer. In addition, the pattern sheets and the lens are removable and can be conveniently replaced.

### BRIEF DESCRIPTION OF DRAWINGS

Fig. 1 is a structural schematic diagram of a fixing unit of a pattern disc and a pattern sheet according to the present invention.
Fig. 2 is a front perspective view of a lighting device according to one embodiment of the invention.
Fig. 3 is a rear perspective view of the lighting device according to one embodiment of the invention.
Fig. 4 is an exploded view of a housing of the lighting device according to one embodiment of the invention.
Fig. 5 is an exploded structure view of the lighting device projecting a pattern according to one embodiment of the invention.
Fig. 6 is an exploded structure view of the lighting device controlling a pattern switching time according to one embodiment of the invention.

### DESCRIPTION OF EMBODIMENTS

The invention will be further described below with reference to the drawings.

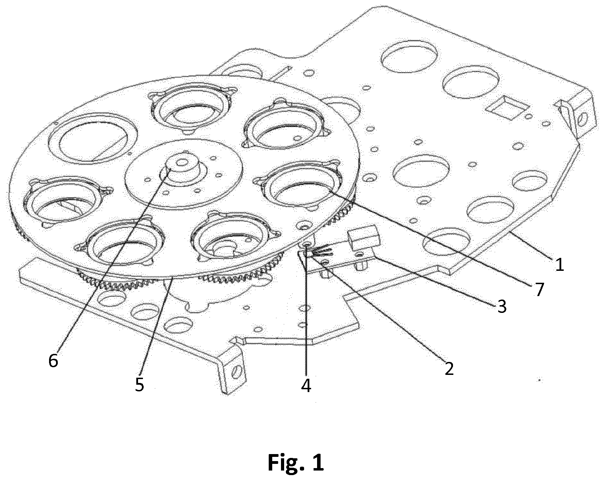

Fig. 1 is a structural schematic diagram of a fixing unit for a pattern disc and a pattern sheet, which includes a base 1, a Hall plate 2, a fixing bracket for the Hall plate 3, a magnet 4, a pattern disc 5, a rotating shaft 6 and pattern sheets. The rotating shaft 6 passing through the axial center of the pattern disc 5 is driven to rotate by a drive mechanism so as to rotate the pattern disc 5. The fixing bracket for the Hall plate 3 is fixed on the base 1, the Hall plate 2 is mounted on the fixing bracket for the Hall plate 3, the magnet 4 is mounted on the pattern disc 5, and the pattern disc 5 is rotated to bring the magnet close to the Hall plate 2 to generate magnetic induction. The Hall plate 2 is aligned with the magnet 4 in a vertical direction. A starting pattern sheet 7 is included in the pattern sheets, and the magnet 4 is positioned in proximity to the starting pattern sheet 7 on the pattern disc 5.

In such configuration, the pattern disc 5 is driven to rotate by the drive mechanism, and the light emitted by the light source is emitted via a pattern sheet in the pattern disc 5 to generate an effect corresponding to the pattern sheet. When another pattern sheet is rotated to the optical path, the lighting device generates an effect corresponding to that pattern sheet. According to the need of the pattern switching of a lamp, the pattern disc 5 needs to be reset and positioned. When the magnet 4 passes over the Hall plate 2, the Hall plate 2 senses the magnet 4 and cuts off the power supply of the drive mechanism according to the sensing data to stop the drive mechanism. Then, the starting pattern sheet 7 of the pattern disc 5 is reset and positioned to the starting position, the reset and positioning of the pattern disc 5 is thus completed. Next time when the lighting device is turned on, the pattern sheet corresponding to the light emitted by the light source is the starting pattern sheet 7 of the pattern disc. The above-mentioned is a method for the reset and positioning of the pattern disc 5 during the closing process of the lighting device. Similarly, the reset and positioning can also be completed during the opening process of the lighting device. The drive mechanism runs when the power supply of the drive mechanism is turned on. When the magnet 4 passes over the Hall plate 2, the Hall plate 2 senses the magnet 4 and turns on the power supply of the light source according to the sensing data to make the light source emit light, such that the pattern sheet corresponding to the light emitted by the light source is the starting pattern sheet 7 of the pattern disc 5.

Preferably, the Hall plate 2 is aligned with the magnet 4 in a vertical direction. When the magnet 4 passes over the Hall plate 2, the Hall plate 2 will sense the magnet 4 to generate magnetic induction. The Hall plate 2 and the magnet 4 being aligned in the vertical direction in the present lighting device can ensure enough intensity of the magnetic induction to avoid that the Hall plate 2 will not sense the magnet 4. According to the present lighting device using the Hall induction principle and the Hall plate 2, the reset and positioning of the pattern disc 5 of the lighting device is effectively realized with less errors, and the precision of the reset and positioning of the pattern disc 5 and the artistic ambience effect of the light fixture are improved. Therefore, it is applicable to the reset and positioning of the pattern discs of various kinds of light fixtures. To improve the artistic ambience effect of the light fixture, in a case where a plurality of lighting devices are used together, starting pattern sheets 7 of these lights need to be fixed in advance, such that the patterns of the present lighting device are always switched from the starting pattern sheet 7 after each power-on. In such case, the consistency of the orders and directions of the patterns of the lighting devices can be ensured by positioning unit of the pattern disc.

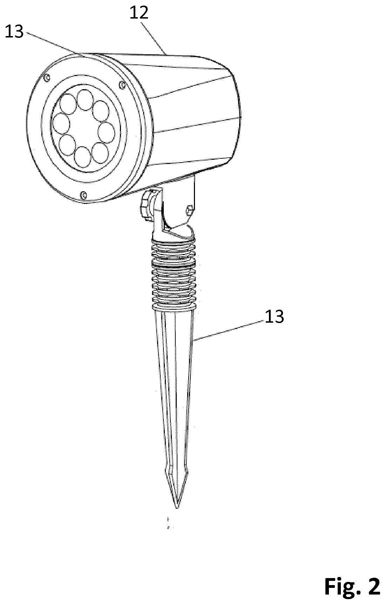

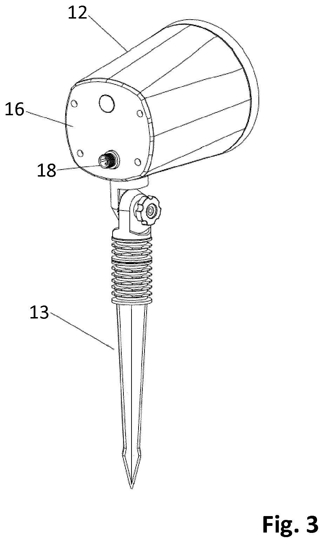

Fig. 2 is a front perspective view of a lighting device according to one embodiment of the invention. Fig. 3 is a rear perspective view of the lighting device according to the embodiment of the invention. The lighting device is applicable for home decoration, leisure and entertainment, birthday party, family party, KTV box, Disco, dance hall, night club, bar, shopping mall, wedding, karaoke, garden and many other occasions. A ground plug 13 is used for fixing the lamp. The inside of a housing composed of a front cover 10, a main housing 12 and a rear cover 16 is provided with a light-emitting device of the lamp, and the light is irradiated from the front cover 10.

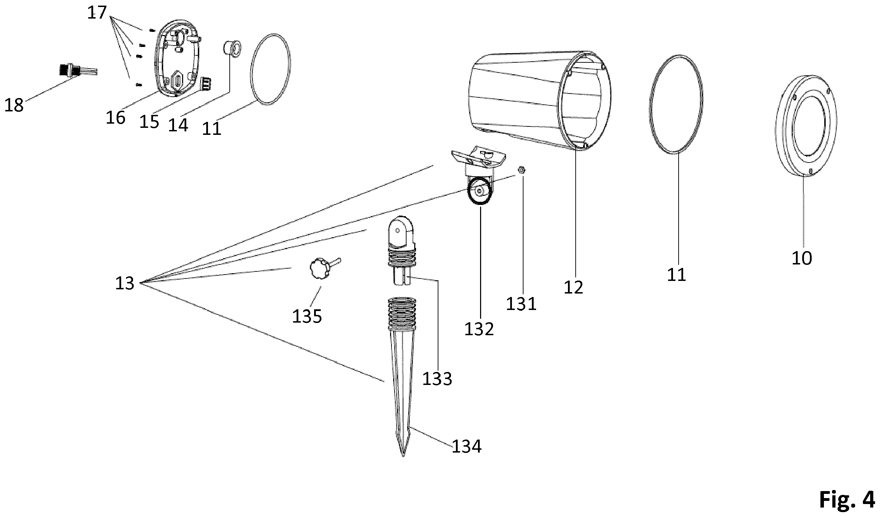

Fig. 4 is an exploded view of the housing of the lighting device in Fig. 2, which includes a front cover 10, waterproof rings 11, a main housing 12, a ground plug 13, a ground plug nut 131, a ground plug fixing mount 132, a ground plug bracket 133, a tapered ground plug 134, a plum blossom shaped knob 135, a keycap 14, a male plug nut 15, the rear cover 16, screws 17 and a male plug 18. The waterproof rings 11 are disposed at connection portions of the front cover 10, the rear cover 16 and the main housing 13 to prevent water from entering the inside of the housing and affecting the use of the lamp. In the process of installing the device, the tapered ground plug 134 is first fixed on the ground, the ground plug bracket 133 and the ground plug fixing mount 132 are then installed, and then the main body of the lamp for irradiating is connected thereto by the ground plug nut 131. Finally, a power transformer or a power adapter is inserted into the male plug 18 and connected to a power supply. Preferably, the male plug nut and the male plug are waterproof plugs to avoid electric leakage in outdoor environments.

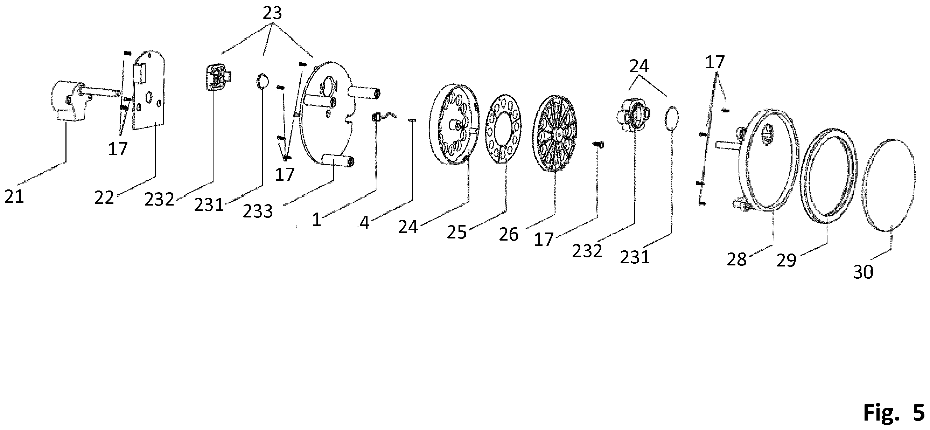

Fig. 5 is an exploded structure view of the lighting device projecting a pattern, which includes an aluminum electrode plate 22, a pattern sheet bracket 24 provided with a plurality of pattern sheets 25, and a stepper motor 21. A light source is provided on the aluminum electrode plate 22 and a preferred light source is an LED, as LED has high efficiency and long lifetime, and is suitable for use on outdoor lighting devices to achieve certain effects, technical objectives, holiday atmospheres, or the like. As a commonly used drive mechanism, the stepper motor 21 is widely used in various automated control systems. A shaft of the stepper motor 21 passes through the axial center of the pattern sheet bracket 24, and the stepper motor 21 drives the pattern sheet bracket 24 to rotate. The pattern sheets 25 are then rotated in turn to the optical path of the light emitted by the light source. In such configuration, the pattern sheet bracket 24 is driven to rotate by the drive mechanism. The light emitted by the light source is emitted via a pattern sheet 25 and passes through a hole in an inner cover 28 and a glass 30 to generate an effect corresponding to the pattern sheet 25. When a next pattern sheet 25 is rotated to the optical path, the lighting device generates an effect corresponding to the next pattern sheet 25. A glass paste ring 29 acting as a sealing is provided between the inner cover 28 and the glass 30.

The pattern sheet bracket 24 is provided with a number of fixing units for pattern sheet 26, and the number of the pattern sheet fixing units 26 corresponds to the number of the pattern sheets 25. According to demands of different artistic effects, the pattern sheets 25 of the lighting device need to be frequently changed. Therefore, the pattern sheets 25 are fixed on the pattern sheet bracket 24 by the fixing unit for pattern sheet 26. When a pattern sheet 25 needs to be changed, the fixing unit for pattern sheet 26 is removed and the pattern sheet 25 is replaced with a new pattern sheet. Preferably, the fixing unit for pattern sheet 26 is a presser, which is convenient to install and remove.

The present lighting device further includes a condenser provided on the light path of the light emitted by the light source. The light emitted by the light source is reflected by the condenser and then is converged into a main beam along the propagation direction of the light, so that the patterns formed will be clearer. The condenser includes a first condenser 23 and a second condenser 27. The first condenser 23 includes a lens bracket 233, a lens 231 and a lens fixing unit 232 for fixing the lens. The lens bracket 233 is provided between the aluminum electrode plate 22 provided with the light source and the pattern sheet bracket 24. The lens 231 is embedded into the lens bracket 233 by the lens fixing unit 232, and the first condenser 23 is provided between the aluminum electrode plate 22 provided with the light source and the pattern sheet bracket 24, so that before emitted on the pattern sheets 25, the light is concentrated by the first condenser 23 into a main beam, other than that the light is emitted on the pattern sheet 25 in a divergent form. If the light is emitted on the pattern sheet 25 in a divergent form, the patterns displayed finally will be blurred. The second condenser 27 includes a lens 231 and a lens fixing unit 232 for fixing the lens. The lens 231 is laminated on the pattern sheet 25 by the lens fixing unit 232, and the light is further converged by the second condenser 27 after passing through the pattern sheet 25, which improves the effect of projection. Preferably, the lens fixing unit is a presser, which has good fixing capability and is convenient to remove.

The present lighting device further includes the Hall plate 2 and the magnet 4. The Hall plate 2 is fixed on the lens bracket 233. The magnet 4 is mounted on the pattern sheet bracket 24, and the pattern sheet bracket 24 is rotated to bring the magnet 4 close to the Hall plate 2 to generate magnetic induction. The Hall plate 2 is preferably aligned with the magnet 4 in the vertical direction. When the magnet 4 passes over the Hall plate 2, the Hall plate 2 senses the magnet 4 to generate magnetic induction. The Hall plate 2 and the magnet 4 being aligned in the vertical direction in the present lighting device can ensure enough intensity of the magnetic induction i to avoid that the Hall plate 2 will not sense the magnet 4.

According to the need of the pattern switching of the lamp, the pattern sheet bracket 24 needs to be reset and positioned. When the magnet 4 passes over the Hall plate 2, the Hall plate 2 senses the magnet 4 and cuts off the power supply of the drive mechanism according to the sensing data to stop the stepper motor 21. Then, the starting pattern sheet 25 of the pattern sheet bracket 24 is reset and positioned to the starting position. Next time when the lighting device is turned on, the pattern sheet 25 corresponding to the light emitted by the light source is the starting pattern sheet 25 of the pattern sheet bracket 24. The above-mentioned is a method for completing the reset and positioning of the pattern sheet bracket 24 during the closing process of the lighting device. Similarly, the reset and positioning can also be completed during the opening process of the lighting device. The drive mechanism runs when the power supply of the drive mechanism is turned on. When the magnet 4 passes over the Hall plate 2, the Hall plate 2 senses the magnet 4 and turns on the power supply of the light source according to the sensing data to make the light source emit light, such that the pattern sheet 25 corresponding to the light emitted by the light source is the starting pattern sheet 25 of the pattern sheet bracket 24. According to the present lighting device using the Hall induction principle and the Hall plate 2, the reset and positioning of the pattern sheet bracket 24 of the lighting device is effectively realized with less errors, and the precision of the reset and positioning of the pattern sheet bracket 24 and the artistic ambience effect of the light fixture are improved. Therefore, it is applicable to the reset positioning of the pattern sheet brackets 24 of various kinds of light fixtures. In the case where a plurality of lighting devices are used together, the consistency of the orders and directions of the patterns of the lighting devices are ensured by the positioning unit of the pattern sheet. The magnet 4 is positioned in proximity to the starting pattern sheet 25 on the pattern sheet bracket 24. To improve the artistic ambience effect of the light fixture, in the case where a plurality of lighting devices are used together, starting patterns of these lights need to be fixed in advance. The magnet 4 is provided at a position in proximity to the starting pattern sheet 25 of the pattern sheet bracket 24, such that the patterns of the present lighting device are always switched from the starting pattern sheet 25 after each power-on.

The present lighting device completes the reset and positioning during the opening process of the lighting device, in which the light is lit within five seconds, and the positioning is performed once every 12 patterns.

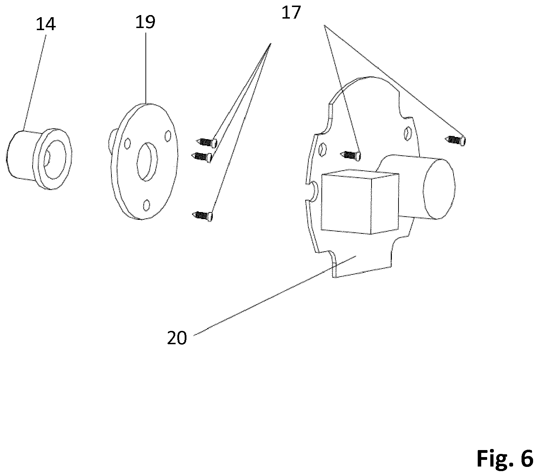

As shown in Fig. 6, the present lighting device further includes a control panel 20 for controlling a pattern switching time and connected with the stepper motor 21. Through the control panel 20, a user can control the pattern switching time, for example, switching the patterns once every two seconds or switching the patterns once every five seconds. Since the drive mechanism drives the rotation of the rotating shaft to rotate the pattern sheet bracket 24, and the control panel is connected with the drive mechanism, the movement of the drive mechanism is controlled in order to control the rotation speed of the pattern sheet bracket 24, thereby realizing the control of the pattern switching time. The present lighting device includes a keycap 14 and a keycap fixing bracket 19. The keycap 14 is connected to the control panel through the keycap fixing bracket 19. The user selects the working mode of the product through the keycap 14. After the product is powered on to come into a default mode, the pattern is switched once every two seconds. Each time when the keycap 14 is pressed, the working mode of the product is as follows: ①switching the patterns once every two seconds → ② switching the patterns once every five seconds → ③ switching the patterns once every ten seconds → ④ returning to mode ①, and a cycle is thus formed in such a sequence. In addition, a manual shutdown function is also provided. When the lamp is on, if the keycap 14 is pressed for 2.5 seconds or more, the product enters a shutdown state, and the light is off. The product is no longer affected by timing after shutdown. The keycap 14 thus must be manually given a short press to power-on. The default mode shows up after the power-on, and the pattern is switched once every two seconds. A memory function is also provided. The mode before a shutdown triggered by a 2.5 s long press or a timed shutdown is recovered after a power-on.

The components of the present lighting device are mainly connected by screws 17 and screw rubber plugs.

According to the present lighting device using the Hall induction principle and the Hall plate 2, the reset and positioning of the pattern disc 5 of the lighting device is effectively realized with less errors, and the precision of the reset positioning of the pattern disc 5 and the artistic ambience effect of the light fixture are improved. Therefore, the lighting device is applicable to the reset positioning of the pattern discs of various kinds of light fixtures. In the case where a plurality of lighting devices are used together, the consistency of the orders and directions of the patterns of the lighting devices are ensured by the pattern disc positioning unit. The present lighting device includes the condenser provided on the light path of the light emitted by the light source. The light emitted by the light source is reflected by the condenser and then is converged into a main beam along the propagation direction of the light to make the patterns formed clearer. The pattern sheets 5 and the lens 231 are all removable and can be conveniently replaced. The pattern disc 5 is rotated by the stepper motor 21, and the light emitted by the light source is emitted through a pattern sheet 25 to generate an effect corresponding to the pattern sheet 25. When a next pattern sheet 25 is rotated to the optical path, the lighting device generates an effect corresponding to the next pattern sheet 25, so that the present product also has an auto-play function.

## Claims

1. A lighting device, comprising:
a light source;
a pattern disc (5) provided with a plurality of pattern sheets;
a rotating shaft (6); and
a drive mechanism,
wherein the rotating shaft (6) passes through an axial center of the pattern disc (5) and is driven to rotate by the drive mechanism to rotate the pattern disc (5), and the pattern sheets are then rotated in turn to a light path of a light emitted by the light source,
the lighting device further comprising:
a positioning unit for pattern disc which includes a Hall plate (2), a fixing bracket (3) for the Hall plate and a magnet (4),
wherein the Hall plate (2) is mounted on the fixing bracket (3) for the Hall plate, the magnet (4) is mounted on the pattern disc (5), and the pattern disc (5) is rotated to bring the magnet (4) close to the Hall plate (2) to generate magnetic induction.

2. The lighting device according to claim 1, wherein the Hall plate (2) is aligned with the magnet (4) in a vertical direction.

3. The lighting device according to claim 1, wherein the magnet (4) is positioned in proximity to a starting pattern sheet (7) on the pattern disc (5).

4. The lighting device according to claim 3, wherein the pattern disc (5) is provided with a number of fixing units for pattern sheet, and the number of fixing units for pattern sheet corresponds to the number of the pattern sheets.

5. The lighting device according to claim 1, further comprising a condenser provided on the light path of the light emitted by the light source.

6. The lighting device according to claim 5, the condenser includes a lens bracket (233), a lens (231) and a lens fixing unit (232) for fixing the lens, wherein the lens bracket (233) is provided between the light source and the pattern disc (5), the lens (231) is embedded in the lens bracket (233) by the lens fixing unit (232), and the fixing bracket (3) for the Hall plate (2) is provided on the lens bracket (233).

7. The lighting device according to claim 4 or 6, wherein the fixing units (26) for pattern sheet (25) and the lens fixing unit (232) are pressers.

8. The lighting device according to claim 1, further comprising a control panel (20) for controlling a pattern switching time, in which the control panel is connected with the drive mechanism.

9. The lighting device according to claim 1, wherein the light source is a light-emitting diode (LED).

10. The lighting device according to claim 8, wherein the drive mechanism is a stepper motor (21).

## Amended claims

### Amended claims in accordance with Rule 137(2) EPC.

1. A lighting device, comprising:
a light source;
a pattern disc (5) provided with a plurality of pattern sheets (25);
a rotating shaft (6); and
a drive mechanism,
wherein the rotating shaft (6) passes through an axial center of the pattern disc (5) and is driven to rotate by the drive mechanism to rotate the pattern disc (5), and the pattern sheets (25) are then rotated in turn to a light path of a light emitted by the light source,
the lighting device further comprising:
a positioning unit for pattern disc which includes a Hall plate (2), a fixing bracket (3) for the Hall plate (2) and a magnet (4),
wherein the Hall plate (2) is mounted on the fixing bracket (3) for the Hall plate (2), the magnet (4) is mounted on the pattern disc (5), and the pattern disc (5) is rotated to bring the magnet (4) close to the Hall plate (2) to generate magnetic induction, **characterized in that** the condenser (23) includes a lens bracket (233), a lens (231) and a lens fixing unit (232) for fixing the lens (231), wherein the lens bracket (233) is provided between the light source and the pattern disc (5), the lens (231) is embedded in the lens bracket (233) by the lens fixing unit (232), and the fixing bracket (3) for the Hall plate (2) is provided on the lens bracket (233).

2. The lighting device according to claim 1, **characterized in that** the Hall plate (2) is aligned with the magnet (4) in a vertical direction.

3. The lighting device according to claim 1, **characterized in that** the magnet (4) is positioned in proximity to a starting pattern sheet (7) on the pattern disc (5).

4. The lighting device according to claim 3, **characterized in that** the pattern disc (5) is provided with a number of fixing units (26) for pattern sheet (25), and the number of fixing units (26) for pattern sheet (25) corresponds to the number of the pattern sheets (25).

5. The lighting device according to claim 1, **characterized by** further comprising a condenser (27) provided on the light path of the light emitted by the light source.

6. The lighting device according to claim 4 or 5, **characterized in that** the fixing units (26) for pattern sheet (25) and the lens fixing unit (232) are pressers.

7. The lighting device according to claim 1, **characterized by** further comprising a control panel (20) for controlling a pattern switching time, in which the control panel is connected with the drive mechanism.

8. The lighting device according to claim 1, **characterized in that** the light source is a light-emitting diode (LED).

9. The lighting device according to claim 7, **characterized in that** the drive mechanism is a stepper motor (21)
